# EUROPEAN PATENT APPLICATION

(11) **EP 2 360 923 A1**
(43) Date of publication of application: **24.08.2011**
(21) Application number: 10305184.3
(22) Date of filing: 24.02.2010
(51) Int. Cl.: H04N 7/24

(54) **Method for selectively requesting adaptive streaming content and a device implementing the method**

(71) Applicant: Thomson Licensing, 92130 Issy-les-Moulineaux (FR)
(72) Inventor: Laurent, Antony, 92443, Issy-les-Moulineaux (FR); Gilberton, Philippe, 92443, Issy-les-Moulineaux (FR); Gautier, Eric, 92443, Issy-les-Moulineaux (FR)
(74) Representative: Ruellan-Lemonnier, Brigitte

(57) **Abstract**

The present invention concerns an adaptive streaming method, at a client device, for receiving, from a server, scalable video content encoded and ordered into a base layer and at least one enhancement layer, the content being split in the form of a base layer chunk comprising content encoded into the base layer and at least one enhancement layer chunk comprising content encoded into the at least one enhancement layer, the chunk comprising a presentation time indicating when to render the chunk, and the chunk representing a rendering duration of the content, a chunk being requested only if it can be received early enough before its presentation time so that it can be transmitted to a rendering device and rendered by the rendering device at the presentation time, the method comprising the steps of pre-fetching the base layer chunks and the enhancement layer chunks.

## Description

### FIELD OF THE INVENTION

The present invention relates generally to adaptive streaming and in particular to a method for selectively requesting adaptive streaming content and a device implementing the method.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Media delivery streaming solutions are mainly based on protocols such as Real time streaming Protocol (RTSP) as defined in the IETF RFC 2326, Microsoft Media Server (MMS) proprietary protocol from Microsoft or Real Time Messaging Protocol (RTMP) proprietary protocol from Adobe Systems.

More recently new streaming techniques based on HTTP protocol have emerged, such as the "Move Adaptive Stream" from Move Networks, the "HTTP Live Streaming" from Apple Inc. and the "IIS (Internet Information Services) Smooth Streaming" from Microsoft. The benefit of using the HTTP protocol in these streaming solutions is its capability to cross over NAT and firewall seamlessly. These HTTP streaming technologies provide a way to compensate erratic network behavior regarding available bandwidth by continuously and gracefully upgrading or downgrading the video quality in order to fit with the bandwidth constraint.

In more details, WO 2005/109224 A2 from Move Networks describes a mechanism in an Agent Controller Module hosted in the client side and able to adapt to the fluctuant network bandwidth thanks to the fact that the media to stream is previously organized in a plurality of streamlets, also called chunks, each of them being encoded from low to high bitrates. According to the available network bandwidth and some other additional information a monitoring tool incorporated in the Agent Controller Module uses the HTTP protocol to request the server to send the best suited chunk to be streamed over a TCP/IP connection. On an elementary chunk basis the quality is up-shifted or down-shifted according to the Agent Controller Module.

The IIS Smooth Streaming Technical Overview, from Alex Zambelli, Microsoft Corporation, March 2009, describes the IIS Smooth Streaming Technique based on HTTP protocol over TCP/IP connection. The media to be streamed by the Server is previously chopped into chunks representing for example one to ten seconds duration. Then these chunks are encoded according to the H.264/MPEG-4 AVC standard at different bitrates and stored within a MP4 file format container. The mechanism selecting the bit rate according to the network bandwidth fluctuation and requesting seamlessly the corresponding chunks to the server is entirely implemented in the client side through an application code, the Silverlight application. The HTTP Live Streaming supports dynamic switching between streams of different data rates in response to changing connection speeds.

Apple Inc. submitted an Internet Draft to IETF in October 2009 on an HTTP streaming method specification entitled "HTTP Live Streaming draft-pantos-http-live-streaming-02". The HTTP streaming architecture is based on 3 pillars: a Server, a Distribution, through a Web server or a Web caching system, and a Client. The media to be streamed is a video encoded in H.264 and an audio encoded in AAC. At a server, it is encapsulated in MPEG-TS containers and fragmented into chunks of equal duration with a specific tool named Apple stream segmenter. This tool generates the chunks that are saved into *.ts files and an index file *;m3u8 constituting the chunks playlist. Then a client fetches the index file first thanks to an URL pointer. The index file in turn specifies the location of the available media files, decryption keys, and any alternate streams available. For the selected stream, the client downloads each available media file in sequence.

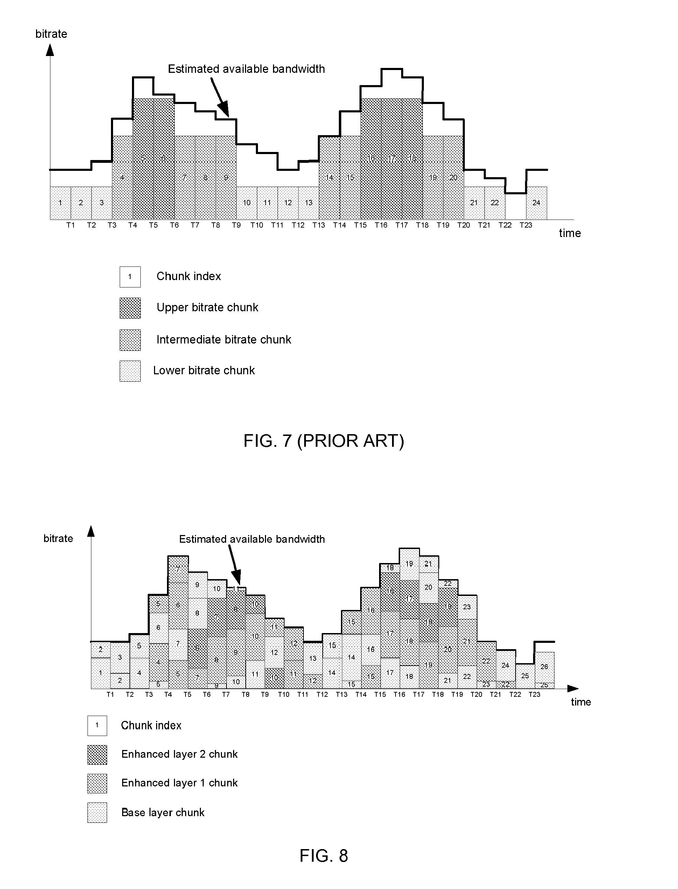

HTTP streaming methods are generally oriented on adapting media viewing experience of the end user according to network congestion. Indeed, as soon as the network bandwidth measured by the client device decreases, the latter requests chunks which are less restrictive with respect to network bandwidth requirement; the "low bandwidth chunks". Conversely when the congestion problems decrease, the client device requests chunks which are more restrictive with respect to network bandwidth requirement; the "high bandwidth chunks". This is illustrated in figure 7 where the chunk corresponding to the presentation time T_{N+1} is requested when the chunk corresponding to the presentation time T_{N} is passed to the video player. HTTP streaming methods request only for the chunks requiring less bandwidth than the available one. If the available bandwidth is too low, no chunk is received, as illustrated in figure 7 for the chunk number 23. They don't ensure an acceptable user experience.

### SUMMARY OF THE INVENTION

The present invention attempts to remedy at least some of the concerns connected with the user experience in the prior art, by providing a method for selectively requesting and pre-fetching content according to the available bandwidth.

The present invention concerns a method, able to solve the user experience problems of the prior art.

To this end, the invention relates to an adaptive streaming method, at a client device, for receiving, from a server, scalable video content encoded and ordered into a base layer and at least one enhancement layer, the scalable video content being split in the form of a base layer chunk comprising the base layer encoded content and at least one enhancement layer chunk comprising the at least one enhancement layer encoded content, the chunks comprising a presentation time indicating when to render the chunk, and the chunks comprising a rendering duration of the content, a chunk being requested only if it can be received early enough before its presentation time so that it can be transmitted to a rendering device and rendered by the rendering device at the presentation time.

According to the invention, the method comprises the steps of measuring the available bandwidth between the client and the server, requesting the server to send base layer chunks until the client buffers a sufficient number of base layer chunks to avoid buffer underflow, and when the client has buffered a predefined number of chunks corresponding to the layer below an enhancement layer, requesting the server to send an enhancement layer chunk of the enhancement layer if the available bandwidth permits to receive the enhancement layer chunk and at least one chunk of each lower layer before their presentation time, until the client buffers a predefined number of enhancement layer chunks of the enhancement layer.

The method enables the client device to pre-fetch chunks dynamically according to the available bandwidth and to the available buffering size. Pre-fetching chunks enables the client device to provide more chunks to a rendering device and to enhance the user experience. In particular, the method is based on content that is gradually encoded into multiple layers. The base layer encoded content comprises content at an ordinary quality level. At least one enhancement layer correspond to a base layer. An enhancement layer comprises content that improves the rendering quality of the content. The method enables the client to receive the whole base layer chunks. It also permits the client to optimize the enhancement layers reception and then to improve the overall rendering quality. As far as enough bandwidth is available, the client downloads the enhancement layers chunks corresponding to the base layer chunks buffered in the client. Of course the number of chunks stored at the client is limited. A chunk received by the client is rendered a few chunk durations later.

According to an embodiment of the invention, the step of measuring comprises the step of estimating if a chunk can be received early enough before its presentation time so that it can be transmitted to a rendering device and rendered by the rendering device at the presentation time.

According to an embodiment of the invention, the chunks are requested through an HTTP request.

According to an embodiment of the invention, the method comprises the steps of measuring the mean available bandwidth and setting the predefined number of chunks values according to the mean available bandwidth.

According to an embodiment of the invention, the predefined number of chunk values are inferior or equal to the number of base layer chunks required to avoid buffer underflow.

According to an embodiment of the invention, the method comprises the steps of sending a chunk to a rendering device early enough before its presentation time so that it can be transmitted to a rendering device and rendered by the rendering device at the presentation time.

Another object of the invention is a chunk receiver comprising a processor, first communicating means for receiving, from a server, scalable video content encoded and ordered into a base layer and at least one enhancement layer, the scalable video content being split in the form of a base layer chunk comprising the base layer encoded content and at least one enhancement layer chunk comprising the at least one enhancement layer encoded content, the chunks comprising a presentation time indicating when to render the chunk, and the chunks comprising a rendering duration of the content, a chunk being requested only if it can be received early enough before its presentation time so that it can be transmitted to a rendering device and rendered by the rendering device at the presentation time, a chunk selector for measuring the available bandwidth between the client and the server, requesting the server to send base layer chunks until the client buffers a sufficient number of base layer chunks to avoid buffer underflow; and when the client has buffered a predefined number of chunks corresponding to the layer below an enhancement layer, requesting the server to send an enhancement layer chunk of the enhancement layer if the available bandwidth permits to receive the enhancement layer chunk and at least one chunk of each lower layer before their presentation time, until the client buffers a predefined number of enhancement layer chunks of the enhancement layer, a memory for buffering the chunks received from the server and a second interface to a second network for transmitting the chunks to a player located on the second network.

Another object of the invention is a chunk selector for measuring the available bandwidth between a client and a server, the client receiving scalable video content encoded and ordered into a base layer and at least one enhancement layer, the scalable video content being split in the form of a base layer chunk comprising the base layer encoded content and at least one enhancement layer chunk comprising the at least one enhancement layer encoded content, the chunks comprising a presentation time indicating when to render the chunk, and the chunks comprising a rendering duration of the content, a chunk being requested only if it can be received early enough before its presentation time so that it can be transmitted to a rendering device and rendered by the rendering device at the presentation time; the chunk selector being adapted for requesting the server to send base layer chunks until the client buffers a sufficient number of base layer chunks to avoid buffer underflow; and when the client has buffered a predefined number of chunks corresponding to the layer below an enhancement layer, requesting the server to send an enhancement layer chunk of the enhancement layer if the available bandwidth permits to receive the enhancement layer chunk and at least one chunk of each lower layer before their presentation time, until the client buffers a predefined number of enhancement layer chunks of the enhancement layer.

Another object of the invention is a set top box comprising a chunk selector module.

Another object of the invention is a computer program product comprising program code instructions for executing the steps of the method according to the invention, when that program is executed on a computer. By "computer program product", it is meant a computer program support, which may consist not only in a storing space containing the program, such as a computer memory, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 shows SVC chunk layers with one scalability type;
- Figure 2 is a block diagram of a system according to the embodiment;
- Figure 3 is a block diagram of a client device according to the embodiment;
- Figure 4 is a first illustration of the delivery of chunk along time;
- Figure 5 is a second illustration of the delivery of chunk along time;
- Figure 6 illustrates the chunk delivery according to a first algorithm;
- Figure 7 illustrates the chunk delivery according to the prior art;
- Figure 8 illustrates the chunk delivery according to a second algorithm;
- Figure 9 is a flow chart showing the algorithm according to the embodiment; and
- Figure 10 shows a comparison of the chunks received according to the first and the second algorithms.

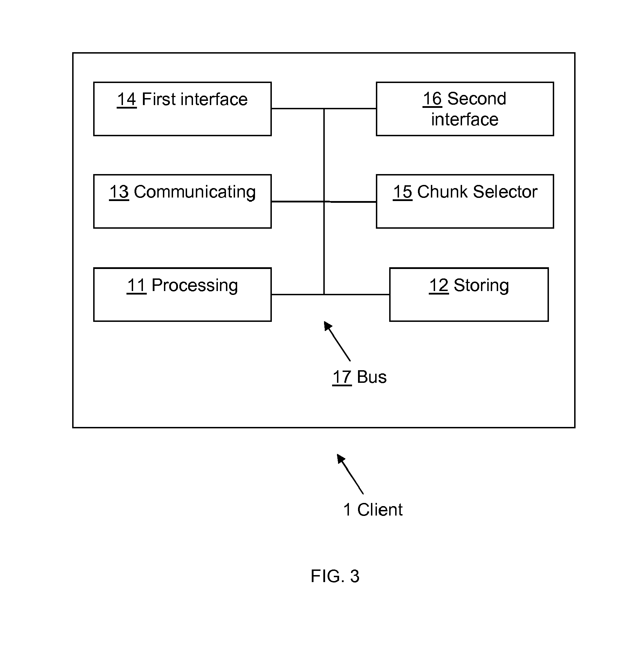

In figure 3, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The embodiment is based on Scalable Video Coding (SVC) which is a compression technique standardized in H.264/MPEG-4 AVC Annex G. SVC defines three granularity parameters: temporal scalability, spatial scalability and Signal to Noise Ratio (SNR) scalability. According to criteria such as the diversity of targets or bandwidth overhead, the encoding of a stream does not necessarily imply to encode in all the existing types of scalability. This conditions the number of layers for each type of scalability.

For HTTP streaming, SVC content is stored in files. SVC files are formatted in either MPEG-2 Transport Streams or MP4 files. These formats allow, among others, to manage the timing information for rendering.

An MPEG2 Transport Stream is usually generated to broadcast a TV channel without any additional data. The broadcast of a TV channel with a SVC video is specified in the standard "Information Technology - Generic Coding of Moving Pictures and Audio: Systems: Transport of scalable video over ITU-T Rec. H.222.0 l ISO/IEC 13818-1; Amendment 3; 03/2009". It defines a Program Map Table (PMT) for the regular TV channel C (one Elementary stream (ES) AVC and one ES audio), with an ES for each enhancement layer "I".

The MP4 file format container is specified in ISO/IEC FDIS 14496-14:2003(E) on "Information technology — Coding of Audio, Picture, Multimedia and Hypermedia Information — Part 14: MP4 file format". It is adapted to SVC content as specified in ISO/IEC 14496-15:2004/FDAM 2:2008(E) on "Information technology — Coding of audio-visual objects — Part 15: Advanced Video Coding (AVC) file format, AMENDMENT 2: File format support for Scalable Video Coding".

The SVC file format description, illustrated by examples, can be found in the paper: "File Format for Scalable Video Coding: P. Amon; T. Rathgen; D. Singer; IEEE Transactions on circuits & Systems for video Technology, vol. 17, September 2007".

In the embodiment, the SVC encoded video is split into chunks. This step is performed at the server so as to have the chunks ready to be streamed when the client emits a request. A chunk doesn't only contain one SVC sample but is a temporal segment of a single contiguous stream, i.e. a collection of consecutive pictures. Hence a chunk has a start time, referred as "chunk offset" hereinafter, and a duration, referred as "chunk duration" hereinafter. Moreover, a chunk is aligned on a group of pictures (GOP) or an integer number of GOPs. Typically the chunk size ranges from 1 to 10s duration. That means each chunk starts with a key frame. The content of a chunk corresponds also to only one layer of a kind of scalability. All the chunk files have the same format..

Whatever the storage format (MPEG2-TS or MP4 file), the SVC content can be either split into a file per chunk, (each chunk has a unique Uniform Resource Identifier (URI)) or stored as it is on the server (e.g. a unique file identified by an URI containing all the chunks). In the first case, the client requests for an URI while in the second one, it requests for either a timecode and a duration or a byte offset (offset from the beginning of the file) and a byte range to be retrieved from a URI.

The available chunks are listed in a playlist generated and provided by the streaming server. This playlist can point to other playlists such as one per type of format. Playlists describe the chunk content, such as the codec or the required bandwidth for downloading it, and the way to request them. The playlist format can be the one described in "HTTP Live Streaming draft, pantos, http-live-streaming, 02", extended with codec information to describe the various SVC layers.

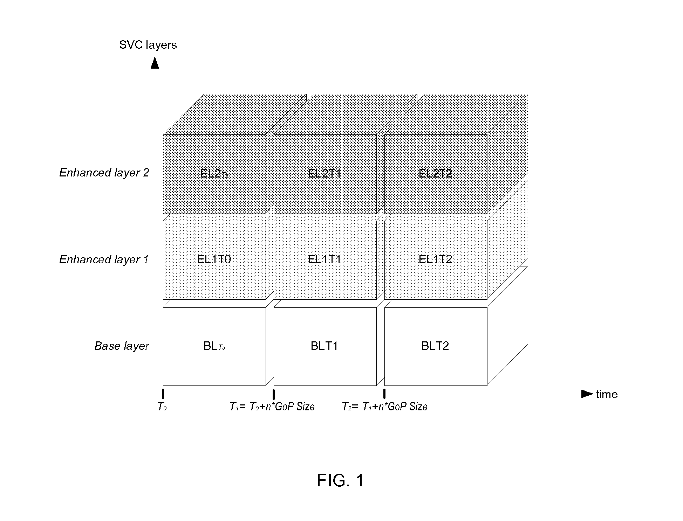

Figure 1 depicts the organization of SVC chunks in the case where only one scalability type (e.g spatial scalability) is encoded, this scalability type being made up with 3 layers. The abscissa scale represents the time (here we have three consecutive chunks) where the "y" scale represents the layers. For instance, the base layer can be Video Graphics Array "VGA", the enhanced layer 1 Standard definition "SD" and the enhanced layer 2 is High definition "HD".

In the following, for sake of simplicity, it is considered only one type of scalability, such as spatial scalability, encoded in 3 layers. That means that the two other types of scalability, temporal and signal to noise ratio (SNR), are only encoded into one layer.

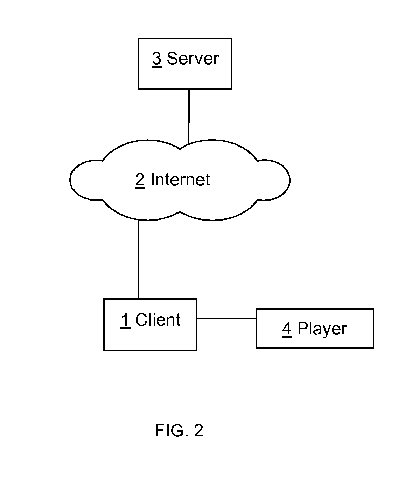

The system according to the embodiment is represented in figure 2. It comprises a client 1 and a server 3 connected through the Internet. The client is also connected to a player 4. On the server side, chunks are streamed upon the client request, using HTTP protocol over TCP/IP connection. The client requests chunks according to an algorithm described hereinafter and based on an estimation of a network bandwidth and notably the extra bandwidth available.

A chunk should have been fully received by the client before it is decoded and rendered. Moreover, whatever the type of scalability, a SVC layer is dependent on all the lower layers. A chunk containing a part of an enhanced layer 1 (e.g EL1_{T0}), is readable only if the chunk containing the base layer for the same time has been fully received (e.g BL_{T0}). Consequently for a given time, the client needs to have received at least the chunk containing the base layer, and then, if possible, the chunk containing the enhanced layer 1 and finally the chunk containing the enhanced layer 2.

The client according to the embodiment is illustrated in figure 3. The client comprises a first interface 14 to a network. In particular the network is the Internet. The client comprises communicating means 13, which comprises the protocol stacks to communicate to a server located on the network. In particular the communicating means is the TCP/IP stack well known in the art. Of course it could be any other type of network and / or communicating means enabling a client to communicate to a server.

The client also comprises a second interface 16 to connect to a video player that is adapted to decode and render the SVC content. Of course the second interface could enable connecting more than one video player. It could be an interface to a network enabling to connect one or more video players. The client also comprises a processor 11 for processing the applications stored in the client. It comprises storing means 12, such as a memory, for buffering the chunks received from the server before they are transmitted to the video player. In particular the memory is a volatile memory. Of course the client comprises a non-volatile memory, not represented, for storing applications running on the client. A chunk selector 15 is an application adapted to perform the chunk selection as described hereinafter. The client could be implemented in a gateway device.

Alternatively the client comprises an embedded video player. It is then a device such as a set-top box.

The method at the client for receiving a chunk is summarized as follows:
- the chunk selector selects a chunk according to the method described herein below,
- the communicating means send a request to the server for receiving the selected chunk,
- the communicating means receive the chunk,
- the chunk is buffered in the memory,
- the chunk is sent to the video player.

A chunk is downloaded in advance before being sent to the video player. The quantity of chunks downloaded in advance, also called pre-fetched chunks, depends on two items:
- the chunk selector buffering duration: duration between the moment when the chunk selector requests the first chunk and the time when it provides this chunk to the video player.
- the available network bandwidth. This value is fluctuant according to network conditions. The mean available bandwidth should be sufficient to receive at least the base layer chunks. This value is balanced so as to represent the useful data, i.e. the SVC payload only, and ignoring the signaling, packets headers and so on.

The combination of both items affects the quantity of pre-fetched chunks and consequently the user experience. The chunk selector buffering duration is set as a constant for all the media content rendering. It is great enough to allow the client to fully receive the next chunk and to ensure the pre-fetch of a certain number of chunks. A large chunk selector buffering requires to pre-fetch more chunks and delays the content rendering time. In the algorithm detailed herein below this duration corresponds to the "chunk duration". This permits to quickly render the video.

The chunk selector does not transmit a chunk to the video player as soon as the chunk is downloaded but at the moment noted T, where T is defined as: T = "chunk selector buffering duration" + "chunk offset". Note that the chunk selector transmits the first base layer chunk to the video player at T = "chunk selector buffering duration". T= 0 corresponds to the moment the chunk selector emits the request to download the first base layer chunk (chunk offset = 0). Alternatively, the chunk selector transmits the chunk as soon as it is received; in this case T represent the moment when the chunk must have been passed to the video player.

HTTP requests are used to get a chunk. The chunk selector requests the chunks individually in each request. Of course, it may also request several chunks in a same HTTP request.

The algorithm for optimizing the chunk selection is described in more details in the context of one SVC scalability level; which is the spatial scalability. Of course, the algorithm could be easily adapted for more SVC scalability types. This requires affecting a priority to each combination of layer type and scalability type. For instance, if we consider the 3 scalabilities (spatial, temporal and SNR), each one having 3 layers (base layer, enhancement layer 1 and enhancement layer 2), that leads to treat 27 (3*3*3) combinations and to affect a priority classification between these 27 combinations.

The available bandwidth is estimated regularly. In the following we consider it is done at every "chunk duration" for instance. It is also considered that the estimation is very close to the real available bandwidth. This simplifies the algorithm description and representation. It is also considered that the server fully delivers a chunk before delivering the next one. The download duration is function of the bandwidth. Frequently calculating provides a more accurate estimation. An estimation algorithm is for example indicated in the patent US7130268B2 that defines an algorithm that performs an end-to-end estimation of the available bandwidth in an end-to-end connection established between a server and a client via a packet switching network such as the Internet Protocol Network (IP).

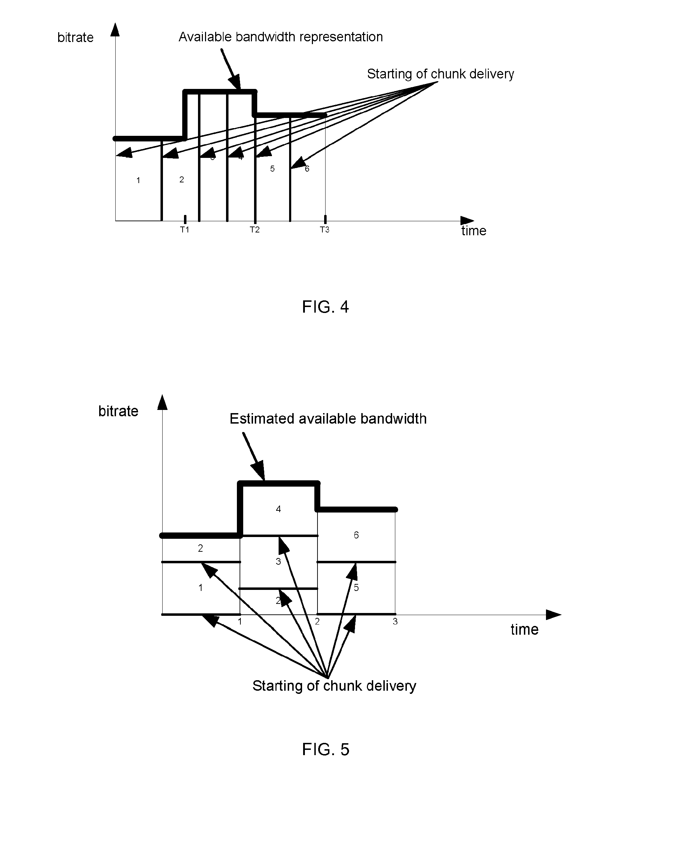

The chunks delivery is represented in figure 4. T_{N} is the moment when the chunk selector must deliver the chunk N to the video player, i.e. this chunk must have been fully received. Each chunk is represented by an index. This representation is based on two assumptions. First, for each layer, chunks have the same size, i.e. all the chunks of a given layer are represented with the same acreage. And, the bandwidth evolution is represented steps by steps.

The chunk download duration depends on the available bandwidth: chunk download duration = chunk size / available bandwidth.

The example illustrated on figure 4 relies on values that are simple to be represented in such a way. But it is not always so easy to indicate exactly when the delivery of a chunk starts and when it ends. For commodity reason, another representation model is adopted to represent the delivery of chunks. This model is only a transposition of the one illustrated in figure 4 and enhances the representation readability and ensures that all chunks of a given type have the same size. It is depicted in the figure 5.

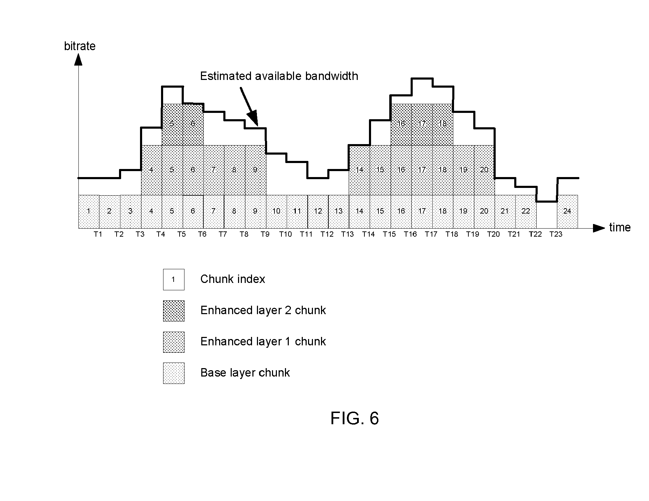

Figure 6 illustrates a first algorithm that pre-fetches chunks just on time. The chunk(s) corresponding to the presentation time T_{N+1} is (are) requested when the chunk(s) corresponding to the presentation time T_{N} is passed to the video player. For a given moment, the chunk selector requests only for the chunks which require altogether less bandwidth than the available one. With this algorithm, a SVC base layer chunk is not received for the given moment corresponding to T₂₃. Consequently, the video is interrupted during the "chunk duration" which is critical for the user experience. This solution corresponds to the prior art for AVC content streaming described in figure 7. It can be used if the objective is to download only the forthcoming chunks to consume very shortly, at "chunk duration" at the most, without buffering some chunks to consume later because those chunks might not be used if the user stops watching this service. But it does not ensure a good user experience.

A second algorithm improves the user experience. It aims at exploiting the whole available bandwidth to optimize the pre-fetch of chunks. This algorithm pre-fetches chunks even if they are consumed several "chunk duration" later. The chunk selection is made according to several criteria: the type of chunks (layer type), the chunk size (i.e. the number of bytes of a chunk), the available bandwidth and the bandwidth evolution trend.

The algorithm first makes sure that a given number of base layer chunks are received to ensure continuity in the video rendering. When this is guaranteed, it focuses on requesting enhanced layer chunks. So the algorithm focuses on pre-fetching base layer chunks as far as the number of chunks is lower than a "BL nb of chunks threshold" defined hereinafter. Then it pre-fetches enhanced layer 1 chunks and enhanced layer 2 chunks successively.

The second algorithm uses a parameter called the "estimated quantity of available bytes" hereinafter. It serves to check the possibility to download a given chunk in a given time. This parameter is calculated according to the trend of the available bandwidth. Thanks to this trend, the chunk selector can predict approximately the number of bytes that can be downloaded from now to the moment the chunk must be passed to the video player.

The algorithm also uses threshold parameters called the "nb of chunks threshold" and "bytes threshold".

The number of chunks threshold refers to the number of chunks of a given layer for a given scalability type stored in the chunk selector that have not been yet transmitted to the video player. The "nb of chunks threshold" parameter is the minimal number of chunks that ensures the buffer to have a minimal stock of chunks, this stock allowing to maintain a given quality (user experience) when the bandwidth decreases. The "number of chunks threshold" for the base layer must be dimensioned to avoid to face a buffer underflow. There is one "nb of chunks threshold" parameter per layer for a given scalability type. Hereinafter, as we consider only one scalability type, they are referred as "BL nb of chunks threshold" (for base layer), "EL1 nb of chunks threshold" for (enhanced layer 1) and "EL2 nb of chunks threshold" (for enhanced layer 2).

The "nb of chunks threshold" parameters are set accordingly to the mean available bandwidth. If the mean available bandwidth is high, the value for the "nb of chunks threshold" parameters is low. In other words, when the bandwidth is estimated to be high, the algorithm is less precautious regarding, for example, the number of Base Layer chunks to pre-fetch. Consequently the algorithm provisions less Base Layer chunks.

According to an embodiment, the algorithm dynamically changes the "nb of chunks threshold" parameters according to the estimation of the mean available bandwidth. The dynamic change is first performed on the "BL nb of chunks threshold" parameter, and then on "EL1 nb of chunks threshold" and "EL2 nb of chunks threshold" parameters. The parameters values are ordered as follows: "BL nb of chunks threshold" ≥ "EL1 nb of chunks threshold" ≥ "EL2 nb of chunks threshold. In the example illustrated in figure 8, the selection of chunks to pre-fetch is done with the following values: "BL nb of chunk threshold" = 2, "EL1 nb of chunk threshold" = 2, "EL2 nb of chunk threshold" = 1.

The "bytes threshold" parameter corresponds to the number of available bytes necessary to ensure the download of a chunk of the current layer and chunks of all lower layers. There is one "bytes threshold" parameter per layer of a given scalability type. Hereafter, as we consider only one scalability type, they are referred as "BL bytes threshold" (for base layer), "EL1 bytes threshold" for (enhanced layer 1) and "EL2 bytes threshold" (for enhanced layer 2).

As the reception of the lower layers chunks is privileged, the "bytes threshold" for a layer must ensure to download also one chunk per lower layer. The values of the parameters are ordered as follows: "BL bytes threshold" < "EL1 bytes threshold" < "EL2 bytes threshold. In the example illustrated in figure 8, the selection of chunks to pre-fetch is done with the following values: BL bytes threshold = BL chunk size, EL1 bytes threshold = BL chunk size + EL1 chunk size, EL2 bytes threshold = BL chunk size + EL1 chunk size + EL2 chunk size.

The algorithm aims at provisioning the "BL nb of chunks threshold" BL chunks first, then "EL1 nb of chunks threshold" EL1 chunks and finally "EL2 nb of chunks threshold" EL2 chunks. If, at a moment, the number of stored chunks for each type of layer has reached its threshold, then the algorithm tries to pre-fetch more BL chunks and only BL chunks. Of course, other variants can be envisaged, such as requesting one more BL chunk, then one more EL1 chunk and then one more EL2 chunk before requesting a new BL chunk and so on. When the algorithm checks if it can download a chunk or not, it compares if its bytes threshold is greater than the estimated quantity of available bytes. In this case, it requests for this chunk, else it considers the next BL chunk.

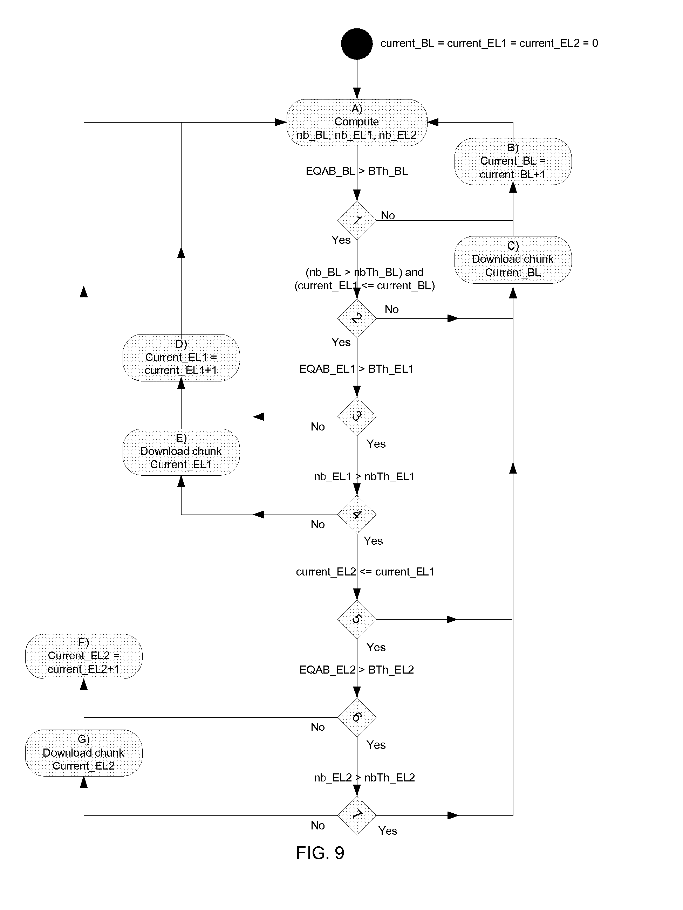

The algorithm used to select the chunk to download is illustrated in figure 9. It uses also the following parameters:
- Current_BL, current_EL1 and current_EL2 parameters represent the index of the current chunk to process respectively for the layers base layer, enhanced layer 1 and enhanced layer 2. In the initial state, these parameters are set to 0. The index of the current chunk to process of a layer cannot be greater than the index of the current chunk to process of the lower layer. The algorithm doesn't consider an EL1 (respectively EL2) chunk while the corresponding BL one (resp. EL1) was not already received.
- Nb_BL, nb_EL1 and nb_EL2 parameters represent the "number of chunks" for the three respective layers (base layer, enhanced layer 1 and enhanced layer 2) stored in the chunk selector at the current time.
- EQAB_BL, EQAB_EL1 and EQAB_EL2 parameters represent the "estimated quantity of available bytes" for the three respective layers (base layer, enhanced layer 1 and enhanced layer 2). They are computed outside this process.
- nbTh_BL, nbTh_EL1 and nbTh_EL2 parameters represent the "nb of chunks thresholds" for the three respective layers (base layer, enhanced layer 1 and enhanced layer 2).
- BTh_BL, BTh_EL1 and BTh_EL2 parameters represent the "bytes thresholds" for the three respective layers (base layer, enhanced layer 1 and enhanced layer 2).

The algorithm comprises the following steps:
A) The 1st step consists in computing "nb_BL", "nb_EL1" and "nb_EL2". Then it checks if a base layer chunk can/must be downloaded. So it compares "EQAB_BL" and "BTh_BL" to check if it needs to download the BL chunk number "current_BL".
   1) Is EQAB_BL > BTh_BL?
   1.1) No, there is not enough available bytes to download this chunk. Then go to B)
B) increment "current_BL" to consider the next BL chunk and go to A) to re-enter the process with this new value for "current_BL".
   1.2) Yes, there are enough available bytes (that means enough time) to download this chunk. It checks if the number of stored BL chunks is greater than the threshold.
   2) Is ((Nb_BL > nbTh_BL) and (current_EL1 <= current_BL))?
   2.1) No. There is not enough stored BL chunks to ensure the user experience or the EL1 chunk is ignored while the corresponding BL one was not already received. Go to C)
C) download the BL chunk with index "current_BL". Go to B)
   2.2) Yes. There are enough pre-fetched BL chunks. Then it checks if an enhanced layer 1 chunk can/must be downloaded. So it compares "EQAB_EL1" and "BTh_EL1" to check if it can download the EL1 chunk number "current_EL1 ".
   3) Is EQAB_EL1 > BTh_EL1?
   3.1) No, there is not enough available bytes to download this chunk. Then go to D)
D) increment "current_EL1" to consider the next EL1 chunk and got to A) to re-enter the process with this new value for "current_EL1".
   3.2) Yes, there are enough available bytes (that means enough time) to download this chunk. It checks if the number of stored EL1 chunks is greater than the threshold.
   4) Is Nb_EL1 > nbTh_EL1?
   4.1) No. There is not enough stored EL1 chunks. Go to E) E) download the EL1 chunk with index "current_EL1 ". Go to D)
   4.2) Yes. Then it checks if an enhanced layer 2 chunk can/must be downloaded. So it compares "EQAB_EL2" and "BTh_EL2" to check if it can download the EL2 chunk number "current_EL2".
   5) Is current_EL2 <= current_EL1?
   5.1) No. we will not consider an EL2 chunk while the corresponding EL1 one (and the BL one a fortiori) was not already received. In this case the algorithm proposes to pre-fetch more BL chunks. So go to C).
   5.2) Yes. So it checks if it can download the EL2 chunk.
   6) Is EQAB_EL2 > BTh_EL2?
   6.1) No, there is not enough available bytes (that means enough time) to download this chunk. Then go to F)
F) increment "current_EL2" to consider the next EL2 chunk and got to A) to re-enter the process with this new value for "current_EL2".
   6.2) Yes, there are enough available bytes to download this chunk. It checks if the number of stored EL2 chunks is greater than the threshold.
   7) Is Nb_EL2 > nbTh_EL2?
   7.1) No. There is not enough stored EL2 chunks. Go to G)
G) download the EL2 chunk with index "current_EL2". Go to F)
   7.2) Yes. In this case the algorithm proposes to pre-fetch more BL chunks. So go to C).

Pre-fetch is then performed in an interlaced way between all the layers.

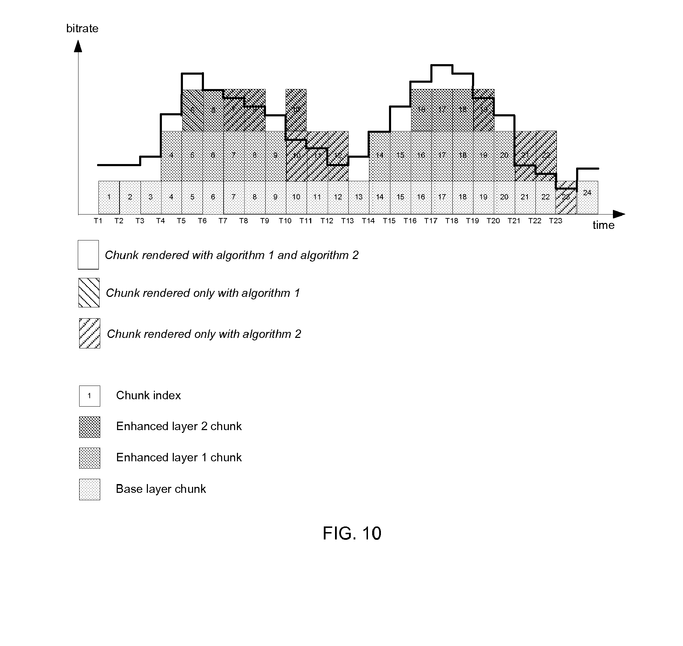

Figure 10 shows a comparison of the chunks received according to the first and the second algorithm. As shown, the second algorithm enhances the user experience. In particular, there is no discontinuity in the video due to the fact that all base layer chunks are received. And, the mean video quality is better; more enhanced layer 1 and enhanced layer 2 chunks are received.

Of course the invention is not limited to SVC and could be used for other compression techniques such as Scalable Multiview Video Coding (SMVC) standard compression technique that enables efficient encoding of sequences captured simultaneously from multiple cameras using a single video stream.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. An adaptive streaming method, at a client device, for receiving, from a server, scalable video content encoded and ordered into a base layer and at least one enhancement layer, said scalable video content being split in the form of a base layer chunk comprising said base layer encoded content and at least one enhancement layer chunk comprising said at least one enhancement layer encoded content, said chunks comprising a presentation time indicating when to render the chunk, and said chunks comprising a rendering duration of said content, a chunk being requested only if it can be received early enough before its presentation time so that it can be transmitted to a rendering device and rendered by said rendering device at the presentation time, said method comprising the steps of:
- measuring the available bandwidth between the client and the server,
- requesting the server to send base layer chunks until said client buffers a sufficient number of base layer chunks to avoid buffer underflow; and
- when said client has buffered a predefined number of chunks corresponding to the layer below an enhancement layer, requesting the server to send an enhancement layer chunk of said enhancement layer if said available bandwidth permits to receive said enhancement layer chunk and at least one chunk of each lower layer before their presentation time, until said client buffers a predefined number of enhancement layer chunks of said enhancement layer.

2. Method according to claim 1, the step of measuring comprising the step of estimating if a chunk can be received early enough before its presentation time so that it can be transmitted to a rendering device and rendered by said rendering device at the presentation time.

3. Method according to claim 1 or 2, said chunks being requested through an HTTP request.

4. Method according to any one of the preceding claims, comprising the steps of:
- measuring the mean available bandwidth, and
- setting said predefined number of chunk values according to the mean available bandwidth.

5. Method according to any one of the preceding claims, said predefined number of chunk values being inferior or equal to the number of base layer chunks required to avoid buffer underflow.

6. Method according to any one of the preceding claims, comprising the steps of sending a chunk to a rendering device early enough before its presentation time so that it can be transmitted to a rendering device and rendered by said rendering device at the presentation time.

7. A chunk receiver comprising:
- a processor;
- first communicating means for receiving, from a server, scalable video content encoded and ordered into a base layer and at least one enhancement layer, said scalable video content being split in the form of a base layer chunk comprising said base layer encoded content and at least one enhancement layer chunk comprising said at least one enhancement layer encoded content, said chunks comprising a presentation time indicating when to render the chunk, and said chunks comprising a rendering duration of said content, a chunk being requested only if it can be received early enough before its presentation time so that it can be transmitted to a rendering device and rendered by said rendering device at the presentation time;
- a chunk selector for measuring the available bandwidth between the client and the server, requesting the server to send base layer chunks until said client buffers a sufficient number of base layer chunks to avoid buffer underflow; and when said client has buffered a predefined number of chunks corresponding to the layer below an enhancement layer, requesting the server to send an enhancement layer chunk of said enhancement layer if said available bandwidth permits to receive said enhancement layer chunk and at least one chunk of each lower layer before their presentation time, until said client buffers a predefined number of enhancement layer chunks of said enhancement layer;
- a memory for buffering the chunks received from said server; and
- a second interface to a second network for transmitting said chunks to a player located on said second network.

8. A chunk selector for measuring the available bandwidth between a client and a server, said client receiving scalable video content encoded and ordered into a base layer and at least one enhancement layer, said scalable video content being split in the form of a base layer chunk comprising said base layer encoded content and at least one enhancement layer chunk comprising said at least one enhancement layer encoded content, said chunks comprising a presentation time indicating when to render the chunk, and said chunks comprising a rendering duration of said content, a chunk being requested only if it can be received early enough before its presentation time so that it can be transmitted to a rendering device and rendered by said rendering device at the presentation time; said chunk selector being adapted for requesting the server to send base layer chunks until said client buffers a sufficient number of base layer chunks to avoid buffer underflow; and when said client has buffered a predefined number of chunks corresponding to the layer below an enhancement layer, requesting the server to send an enhancement layer chunk of said enhancement layer if said available bandwidth permits to receive said enhancement layer chunk and at least one chunk of each lower layer before their presentation time, until said client buffers a predefined number of enhancement layer chunks of said enhancement layer.

9. A set top box comprising a chunk selector module according to the claim 8.

10. Computer program product, **characterized in that** it comprises program code instructions for executing the steps of the method according to claim 1 to 6 when said program is executed on a computer.
